# EUROPEAN PATENT APPLICATION

(11) **EP 3 330 360 A1**
(43) Date of publication of application: **06.06.2018**
(21) Application number: 16201537.4
(22) Date of filing: 30.11.2016
(51) Int. Cl.: C12C 11/11, C12G 3/08, C12G 3/14

(54) **PROCESS FOR THE PRODUCTION OF A LOW ALCOHOL OR NON-ALCOHOL BEER OR CIDER CONCENTRATE**

(71) Applicant: Anheuser-Busch InBev S.A., 1000 Brussels (BE)
(72) Inventor: The designation of the inventor has not yet been filed
(74) Representative: BiiP cvba

(57) **Abstract**

1. A method for preparing beer concentrate, comprising the steps of:
a) feeding a beer or cider (1) stream and a water (H₂O) stream to a first concentration step comprising diafiltration (A) over a nanofiltration or reverse osmosis membrane to obtain a low alcohol retentate (2) and a permeate (3) comprising alcohol and volatile flavour components, wherein the retentate (2) is characterised by the concentration of unfilterable compounds equal to or higher than 5% (w/w), preferably 10% (w/w), most preferably 15% (w/w), as calculated from density measurement corrected for the alcohol amount;
b) Subjecting the permeate comprising alcohol and volatile flavour components (3) to a next concentration step (B) comprising freeze concentration; reverse osmosis; or adsorption to obtain a fraction (4) comprising volatile flavour components (4) and a leftover fraction (5).

## Description

### TECHNICAL FIELD

The present invention concerns a method for preparing a beer concentrate or cider concentrate having a low alcohol content starting from a regular, alcohol containing beer or cider. In particular the invention concerns a method comprising a step for obtaining the desired concentrate and a step for purifying and/or concentrating of at least one component in a side stream generated during the step for obtaining the desired concentrate.

### BACKGROUND OF THE INVENTION

The major benefit of producing concentrates is the reduction in weight and volume which allows to save on storage and transportation costs, in addition to also often having favourable effect on improving shelf life of a product. Since beers and many other alcoholic beverages in general contain about 80 to 90% water, it has naturally been recognised that the most economical way to store or distribute them over considerable distances would be in the form of a concentrate.

In principle, a concentrate can be reconstituted to the initial product at any place at and time by the addition of the solvent, usually water. Nevertheless, it is not straightforward to produce a beer or cider like beverage concentrate, the main difficulty lying in the fact that most concentration procedures lead to reduction in many flavour or aroma components. Beer in particular, is a very challenging beverage to produce a concentrate from because, unlike beverages produced from fruit juice fermentation such as wine or perry; the aromas present in beer are subtler and much less concentrated, which means that losing even a small portion of them at the concentration stage will have a profound effect on the organoleptic perception of the final rehydrated product. In addition, because of the great popularity of the drink and existence of a wide public of demanding beer aficionados, the reconstituted drink is expected to meet expectations with regard to its distinctive aroma, taste, mouthfeel, foaming properties, colour, and even haze perception. Reconstituted beer simply cannot taste like a diluted beer missing some characteristics; for gaining consumer acceptance it simply must have all the qualities of the "real" unprocessed beer.

Methods for producing beer concentrates and then rehydrating them into final beverages are known in the art. Various methods for concentrating alcoholic beverages that are known in the brewing industry include such processes as freeze-drying, reverse osmosis, and filtration. All of these methods start with a substantially finished beer and then remove the water. The resulting concentrated beverages can then be transported more cost-effectively and then reconstituted at a final destination by addition of water, carbon dioxide, and alternatively also alcohol.

An example of one method for preparation of a reconstitutable beer concentrate can be found in GB2133418. The method is based on subjecting beer to reverse osmosis and results in a low alcohol concentrate which can be rehydrated to a low-alcohol beer.

Although the prior art provides some methods of obtaining low alcohol beers, the methods involve a substantial loss of aromas from the beer and fail to present beer concentrates that after rehydratation have organoleptic properties desired in the market.

### SUMMARY OF THE INVENTION

The present invention is defined in the appended independent claims. Preferred embodiments are defined in the dependent claims. In particular, the present invention concerns method for preparing beer or cider concentrate comprising the steps of:
a) Feeding beer or cider to a first concentration step comprising diafiltration over a nanofiltration and/or reverse osmosis membrane to obtain a low alcohol retentate and a permeate comprising alcohol and volatile flavour components, wherein the retentate is characterised by the concentration of unfilterable compounds equal to or higher than 5% (w/w), preferably 10% (w/w), most preferably 15% (w/w), as calculated from density measurement corrected for the alcohol amount;
b) Subjecting the permeate comprising alcohol and volatile flavour components to a next concentration step comprising freeze concentration; reverse osmosis; or adsorption to obtain a fraction comprising volatile flavour components and a leftover fraction.

In case the next concentration step b) comprises reverse osmosis or freeze concentration, the method may comprise a subsequent step c) of subjecting the fraction comprising the volatile flavour components to an adsorption process, adsorbing at least part of the volatile flavour components from the fraction and subsequently eluting the adsorbed volatile flavour components in a volume of water or ethanol to obtain a concentrated fraction of volatile flavour components and a leftover fraction.

According to a preferred embodiment, the fraction comprising volatile flavour components of step b) or c) is at least partially added to the low alcohol retentate, either as such or in combination with a diluent.

In case the concentration step b) comprises reverse osmosis, the retentate of that reverse osmosis step is the fraction comprising volatile flavour components, which fraction may be recirculated to the feed of the first concentration step.

According to a preferred embodiment, the leftover fraction of an adsorption step, may be subjected to a distillation or freeze concentration process to obtain a concentrated ethanol fraction and a water fraction.

In case the method comprises freeze concentration, a water fraction is obtained that is preferably recirculated to the feed of the first concentration step.

### BRIEF DESCRIPTION OF THE FIGURES

For a fuller understanding of the nature of the present invention, reference is made to the following detailed description taken in conjunction with the accompanying drawings in which:

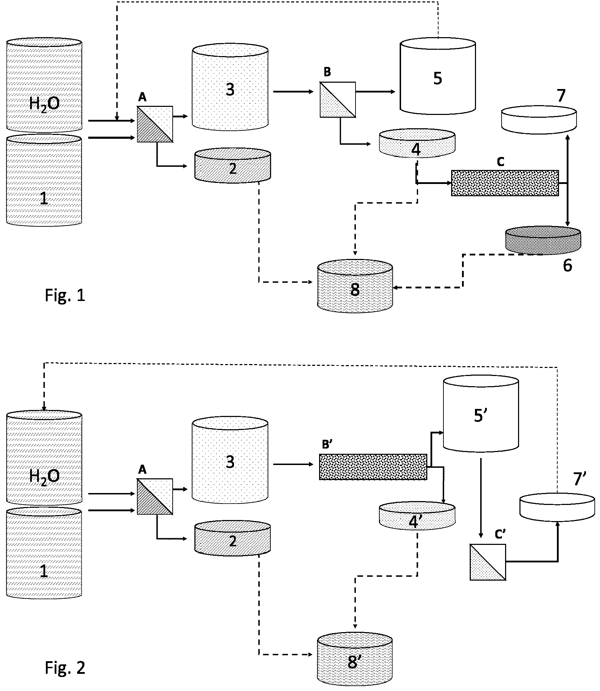

**Figure 1****:** shows a block diagram schematically illustrating key steps of the method according to the present invention. A - first concentration step comprising diafiltration over a nanofiltration or reverse osmosis membrane; B - second concentration step comprising freeze concentration; C - a third method step comprising adsorption;
   1 - beer subjected to nanofiltration; H₂O- water feed to diafiltration; 2 - retentate; 3 - permeate comprising ethanol and volatile aroma components; 4 - concentrated fraction comprising alcohol and volatile flavour components; 5 - leftover fraction from the second concentration step; 6 - concentrated fraction comprising volatile aroma components C; 7 - leftover fraction from the adsorption step; 8- optionally, mixture of the fraction comprising volatile flavour components and retentate from step A.
**Figures 2** **&** **3****:** shows a block diagram schematically illustrating key steps of alternative methods according to the present invention;
**Figure 4****:** shows a graph illustrating the relationship between the concentration factors of different retentates (2) obtained from different beers (beer 1-4), and the amount of unfilterable compounds ("% solids") achieved is said retentates following the first concentration step according to the method of the invention.

### DEFINITIONS

As used herein, the term ***"concentrate"*** is given the definition of Oxford dictionary: "A *substance made by removing or reducing the diluting agent; a concentrated form of something"* (cf. http://www.oxforddictionaries.com/definition/english/concentrate). In line with this, the term *"beer* or cider *concentrate"* or, alternatively *"(concentrated) beer or cider base"* or *"beer or cider syrup",* is meant to relate to beer or cider, respectively which had the majority of its solvent component - i.e. water - removed, while retaining most of the dissolved components conferring such features as taste, smell, colour, mouthfeel etc.

As used herein, the term ***"beer"*** is to be construed according to a rather broad definition:
*"the drink obtained by fermenting from a wort, prepared with starchy or sugary raw materials, including hop powder or hop extracts and drinkable water. Aside from barley malt and wheat malt, only the following may be considered for brewing, mixed with e.g. wheat malt, starchy or sugary raw materials in which the total quantity may not exceed 80%, preferably 40% of the total weight of the starchy or sugary raw materials:*
   *(a) maize, rice, sugar, wheat, barley and the various forms of them.*
   *(b) saccharose, converted sugar, dextrose and glucose syrup.*

Although according to certain national legislations, not all fermented malt-based beverages can be called beer, in the context of the present invention, the term *"beer"* and *"fermented malt based beverage"* are used herein as synonyms and can be interchanged. It follows, that as used herein the terms *"reconstituted beer"* and *"reconstituted fermented malt based beverage"* are to be understood as beverages composition-wise substantially identical to beer but obtained by addition of the solvent, i.e. water or carbonated water, to a previously prepared beer concentrate. *"Low-**alcohol beer"*** is defined herein as a beer having an alcohol content of less than 1,2%ABV, preferably less than 0,5 %ABV, whereas ***"non-alcoholic beer"*** is defined as a beer having an alcohol content of less than 0,05%ABV.

Next, as used herein, the term ***"cider"*** is to be understood as every alcoholic beverage resulting from the fermentation of apple juice or apple juice mixed with up to 10% pear juice. This term also encompasses the any product of this fermented apple juice further modified by adding such standard cider manufacturing additives as acids (citric or tartaric) and/or sugar, filtering, cooling, saturating with carbon dioxide, pasteurizing, etc., which is commercialized under the term cider.

As used herein, the term ***"unfilterable compounds"*** is to be understood as referring to all the diverse compounds comprised in any type of beer or cider, which cannot pass through a **nanofiltration** membrane, i.e. beer compounds having the mean size greater than 150 Da, 180 Da, or 200 Da, which is the molecular weight retention size cut-off depending on a given nanofiltration membrane. As opposed to the *"filterable compounds"* comprising water, monovalent and some bivalent ions, low molecular alcohols such as ethanol, low molecular esters and a number of volatile flavour components, the unfilterable compounds mainly include sugars, mostly polysaccharides; sugar alcohols, polyphenols, pentosans, peptides and proteins, high molecular weight alcohols, high molecular weight esters, partially multivalent ions, and many other mainly organic and highly divergent compounds that vary depending on the beer or cider type. Due the complexity and discrepancies between different beer or cider compositions, the collective concentration of the unfilterable compounds is often referred to (in great simplification and without being exact) as "concentration of sugars" or "concentration of solids" and can be easily calculated from mass balance considerations taking into account of parameters such as density, viscosity, beer rheology, original gravity or extract, real gravity or extract, degree of fermentation (RDF) and/or alcohol content. In brewing practice, the concentration of unfilterable compounds is routinely estimated from density (real extract) measurement corrected for the density of the measured ethanol amount, ethanol being the most prevalent compound of density < 1 g/cm³ and therefore affecting the density measurement most substantially. Such measurements are well known in the art, are routinely performed using standard beer analysing systems like Anton Paar Alcolyzer device, and thus are readily and easily performable by any person skilled in beer brewing.

The amount of components dissolved in beer can also be expressed as so called specific gravity (relative density) or apparent specific gravity. The first one is measured as density (weight per unit volume) of beer divided by the density of water used as a reference substance, whereas the second one as the weight of a volume of beer to the weight of an equal volume of water. For example, a specific gravity of 1.050 ("50 points") indicates that the substance is 5% heavier than an equal volume of water. The densities of water, and consequently also beer, vary with temperature; therefore for both specific gravity and apparent specific gravity the measurement of the sample and the reference value is done under the same specified temperature and pressure conditions. Pressure is nearly always 1 atm equal to 101.325 kPa, while temperatures may differ depending on the choice of further systems for approximating beer density. Examples of such systems are two empirical scales, Plato and the Brix scale, that are commonly used in brewing and wine industries, respectively. Both scales represent the strength of the solution as percentage of sugar by mass; one degree Plato (abbreviated °P) or one degree Brix (symbol °Bx) is 1 gram of sucrose in 100 grams of water. There is a difference between these units mainly due to both scales being developed for solutions of sucrose at different temperatures, but it is so insignificant that they may be used virtually interchangeably. For example, beer measured at 12° Plato at 15.5°C has the same density as a water-sucrose solution containing 12% sucrose by mass at 15.5°C, which is approximately equal to 12° Brix, being the same density as a water-sucrose solution containing 12% sucrose by mass at 20°C. The Plato and Brix scales have an advantage over specific gravity in that they expresses the density measurement in terms of the amount of fermentable materials, which is particularly useful at early stages of brewing. As, of course, both beer and wort are composed of more solids than just sucrose, it is not exact. The relationship between degrees Plato and specific gravity is not linear, but a good approximation is that 1°P equals 4 "brewer's points" (4 x 0.001); thus 12° Plato corresponds to specific gravity of 1.048 [1+(12 x 4 x .001)].

The term *"original gravity"* or *"original extract"* refers to specific gravity as measured before fermentation, whereas the term *"final gravity"* or *"final extract"* relates to specific gravity measured at the completion of fermentation. In general, gravity refers to the specific gravity of the beer at various stages in its fermentation. Initially, before alcohol production by the yeast, the specific gravity of wort (i.e. the ground malt before beer fermentation) is mostly dependent on the amount of sucrose. Therefore, the original gravity reading at the beginning of the fermentation can be used to determine sugar content in Plato or Brix scales. As fermentation progresses, the yeast convert sugars to carbon dioxide, ethanol, yeast biomass, and flavour components. The lowering of the sugar amount and the increasing presence of ethanol, which has appreciably lesser density than water, both contribute to lowering of the specific gravity of the fermenting beer. Original gravity reading compared to final gravity reading can be used to estimate the amount of sugar consumed and thus the amount of ethanol produced. For example, for a regular beer, original gravity could be 1.050 and final gravity could be 1.010. Similarly, knowing original gravity of a beverage and its alcohol amount can be used to estimate the amount of sugars consumed during the fermentation. The degree to which sugar has been fermented into alcohol is expressed with the term *"real degree of fermentation"* or "RDF", and is often given as a fraction of original gravity transformed into ethanol and CO₂. The RDF of beer is in theory indicative of its sweetness as beers usually have more residual sugar and thus lower RDF.

Concentration steps may involve any of the variety of techniques recognised in the art, which allow partial or substantial separation of water from the beer and thus retention of most of the dissolved therein components in a lower than initial volume. Many of the techniques currently used within the beverage industry rely on the so called membrane technologies, which provide a cheaper alternative to conventional heat-treatment processes and involve separation of substances into two fractions with the help of a semipermeable membrane. The faction comprising particles smaller than the membrane pore size passes through the membrane and, as used herein is referred to as *"permeate"* or *"filtrate".* Everything else retained on the feed side of the membrane as used herein is referred to as *"retentate".*

Typical membrane filtration systems include for example pressure-driven techniques microfiltration, ultrafiltration, nanofiltration and reverse osmosis. As used herein, the term *"microfiltration"* refers to a membrane filtration technique for the retention of particles having size of 0.1 to 10 µm and larger. Usually, microfiltration is a low-pressure process, typically operating at pressures ranging from 0.34 - 3 bar¹. Microfiltration allows separation of particles such as yeast, protozoa, large bacteria, organic and inorganic sediments etc. Then, as used herein, the term *"ultrafiltration"* designates a membrane filtration technique for the retention of particles having size of about 0.01 µm and larger. Ultrafiltration usually retains particles having molecular weight greater than 1000 Dalton, such as most viruses, proteins of certain sizes, nucleic acids, dextrins, pentosan chains ect. Typical operating pressures for ultrafiltration range from 0.48 - 10 bar. Further, as used herein the term *"nanofiltration"* shall be understood as a membrane filtration technique for the retention of particles having size of 0.001 µm to 0.01 µm and larger. Nanofiltration is capable of retaining divalent or multivalent ions, such as divalent salts, and most organic compounds larger than appox. 180 Dalton, which include oligosaccharides and many flavour compounds; while allowing water, ethanol, monovalent ions, and some organic molecules such as many aromatic esters pass through. Operating pressures of 8 - 41 bar are typical for nanofiltration. Where nanofiltration is operated under inlet pressure within the upper end of this range, from 18 bar above, as used herein, it shall be termed *"high pressure nanofiltration".* Lastly, as used herein the term *"reverse osmosis"* shall be understood as referring to a high-pressure membrane process where the applied pressure is used to overcome osmotic pressure. Reverse osmosis usually allows to retain particles having size of 0.00005 µm to 0.0001 µm and larger, i.e. almost all particles and ionic species. Substances with molecular weight above 50 Dalton are retained almost without exception. Operating pressures are typically between 21 and 76 bar, but may reach up to 150 bar in specific applications.
¹ wherein the unit bar equals 100,000 Pa, in accordance with the definition of IUPAC, [1 Pa = 1 N/m^2 = 1 kg/m*s^2 in SI units.]

Further, as used herein the term *"volatile flavour components"* shall be understood as any of the substances comprised in beer that contribute to its complex olfactory profile, said substances by their chemical nature having a boiling point lower than that of water. Examples of volatile beer flavour components include but are not limited to acetaldehyde, N-propanol, ethyl acetate, isobutyl alcohol, isoamyl alcohol, isoamyl acetate, ethyl hexanoate, ethyl octanoate, phenylethyl alcohol, 2-methyl-1-butanol and many more.

### DETAILED DESCRIPTION OF THE INVENTION

The present invention concerns a method for the production of a low alcohol or non-alcoholic beer or cider concentrate, said method comprising the steps of:
a) feeding a beer or cider (1) stream and a water (H₂O) stream to a first concentration step comprising diafiltration (A) over a nanofiltration or reverse osmosis membrane to obtain a low alcohol retentate (2) and a permeate (3) comprising alcohol and volatile flavour components, wherein the retentate (2) is characterised by the concentration of unfilterable compounds equal to or higher than 5% (w/w), preferably 10% (w/w), most preferably 15% (w/w), as calculated from density measurement corrected for the alcohol amount;
b) Subjecting the permeate comprising alcohol and volatile flavour components (3) to a next concentration step (B) comprising freeze concentration; reverse osmosis; or adsorption to obtain a fraction (4) comprising volatile flavour components (4) and a leftover fraction (5).

In general, beer (1) subjected to diafiltration (A) according to the invention is preferably clear beer that was treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

As can be appreciated from the present disclosure, the method of the invention is particularly advantageous for obtaining low-volume high-density beer or cider concentrates. The degree of concentration of the final product largely depends on the degree of concentration of the retentate obtained via diafiltration in step A). Therefore, the present invention provides a method wherein the retentate not only comprises majority of beer (or cider) flavour components but also can potentially be characterised by a high concentration factor of 5, 10, 15, or even 20 or higher.

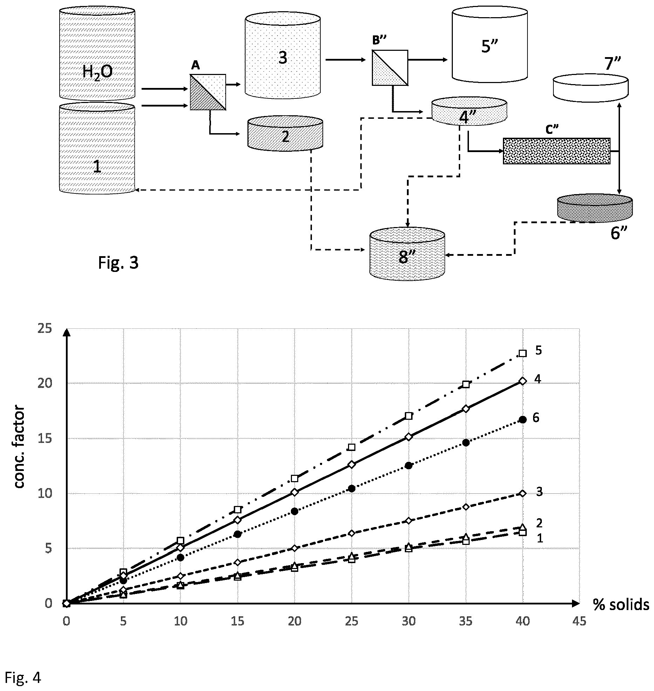

A used herein the term *"concentration factor"* shall be understood as the ratio of the beer or cider volume subjected to nanofiltration or reverse osmosis in step A) to the volume of the obtained retentate at the end of the nanofiltration or reverse osmosis in step a), i.e. the ration of the feed volume to the volume of the retentate obtained in the step a) of the method of the present invention. In an particularly preferred embodiment, a method in accordance with the previous embodiments is provided, wherein the retentate obtained in step a) is characterised by concentration factor of 5 or higher, preferably 10 or higher, more preferably 15 or higher, most preferably 20 or higher. A relationship between the concentration factor within the above-defined meaning, and the concentration of unfilterable compounds possible to be obtained in the retentate from step a) naturally depends on the type of beer or cider initially subjected to nanofiltration or reverse osmosis, which is shown and can be appreciated from in the graph presented in Figure 4, wherein each line represents a different beverage (lines 1-4 were obtained for different beers, line 5 obtained for cider)

Concentration factors of 10 and above can advantageously, in terms of speed and performance, be obtained by, as used herein, a high-pressure nanofiltration diafiltration, i.e. diafiltration over a nanofiltration membrane conducted under a pressure of minimum 18 bar. Thus, in preferred embodiments of the invention, a method is provided wherein the nanofiltration in step a) is a high-pressure nanofiltration, defined as nanofiltration conducted under a pressure in the range of about 18-41 bar, preferably in the range of about 20-35 bar, most preferably about 30 bar.

In case of cross-flow filtration we can always achieve the concentration one pass. But to make the operation more economical multi stages operation is done.

In line with the above, the present invention is based on the finding that diafiltration of beer over a nanofiltration membrane, high-pressure nanofiltration diafiltration in particular, not only allows to retain majority of important beer flavour compounds in the retentate but also provides concentration potential substantially superior to the one of ultrafiltration or reverse osmosis, potentially allowing to obtain retentate of density comprised between 20-50°P or higher even after a single filtration pass. In an advantageously economical embodiment, nanofiltration is performed as a multi-stage operation, wherein the retentate is progressing from one stage to the next one while becoming more and more concentrated. The preferred final density value of the retentate obtainable according to step a) of the present invention is comprised between 30-80 °P or higher, preferably between 50-70 °P, most preferably about 60 °P. Therefore, in one advantageous embodiment of the invention, the retentate from step a) is obtained in a single pass of nanofiltration, preferably being high-pressure nanofiltration, more preferably high-pressure nanofiltration conducted under a pressure range comprised between 18-35 bar, most preferably between about 20-30 bar.

It has been observed that such high concentration potential can particularly be achieved using polymeric spiral membranes in range of 150-200 Daltons or similar. Examples of such membranes include thin film composite ATF (alternating tangential filtration, Refine Technology) membranes such as the ones currently available from DOW and Parker Domnick Hunter.

After the nanofiltration step, the highly concentrated retentate is collected while the aqueous permeate is fed to the second concentration step b) in order to selectively retrieve ethanol and volatile flavour components, said step either comprising freeze concentration, reverse osmosis or freeze concentration, and/or combination thereof.

Figure 1 schematically illustrates a scheme of the method according to the present invention wherein freeze concentration is applied as a next concentration step B). Freeze concentration essentially concerns the removal of pure water in the form of ice crystals at sub zero temperatures.

As a first step, beer (1) and water are fed to diafiltration (A) through a semi-permeable membrane acting as physical barrier to passage of most beer components of mean molecular weight (MW) > 150-200 Da (nanofiltration membrane) or of mean molecular weight (MW) > 50 Da (reverse-osmosis membrane), but permeable to water, majority of ethanol, monovalent salts and certain amount of beer flavour components. This first fraction retained on the membrane's inflow side is termed retentate (2) and is collected, whereas the fraction comprising alcohol and volatile flavour components is termed permeate (3) and is directed to a second concentration step (B). By the addition of water, preferably deoxygenated and demineralized or even deionized water, alcohol is washed out of the permeate, allowing reducing the alcohol amount remaining in the retentate to a level wherein the alcohol concentration in the retentate is equal to or lower than 1,2% ABV, preferably equal to or lower than 0,5% ABV, most preferably equal to or lower than 0,05%ABV, measured on the original volume of beer fed to the membrane for obtaining the retentate %ABV of the retentate is equal to or lower than 1,2%ABV multiplied by 100/(100-the concentration factor of the beer unfilterable compounds during diafiltration), preferably equal to or less than 0,5%ABV multiplied by 100/(100 - the concentration factor of the beer unfilterable compounds during diafiltration), even more preferably equal to or less than 0,05%ABV multiplied by 100/(100 - the concentration factor of the beer unfilterable compounds during diafiltration) . As such, reconstituting the beer by addition of water to the retentate allows obtaining a low alcoholic or even non-alcoholic beer.

In the method illustrated in figure 1, the second concentration step B involves freeze concentration and results in separation of the permeate (3) from the previous diafiltration step (A) into two fractions: first, a fraction comprising alcohol and flavour components (4); and, secondly, a aqueous leftover fraction (5), that is discarded or that can be recirculated as water to the feed of the diafiltration step A).

The fraction (4) comprising alcohol and flavour components can be further concentrated by an adsorption process, wherein the flavour components are adsorbed on a column, whilst the ethanol and water in the fraction pass through the column and are collected as a fraction (7) that can be discarded or optionally (not shown in the figures) fed to a distillation process to obtain a distilled alcohol fraction. The flavour components adsorbed on the column can be eluted (depending on the components and column either with water or ethanol) to obtain a concentrated fraction (6) comprising volatile flavour components. Both fractions (4) or (6) comprising flavour components can be entirely or partially mixed with the retentate (2) of the diafiltration step A) to obtain a beer concentrate (8) or can be used an ingredient for beer, as a component in beer reconstitution or as a flavour component to be added to a beer or cider. When used as a component in beer reconstitution starting from a beer concentrate, the beer concentrate can either be the beer concentrate obtained by the diafiltration or another beer concentrate.

In the method illustrated in figure 2, the second concentration step B' involves adsorption and results in separation of the permeate (3) from the previous diafiltration step (A) into two fractions: first, a fraction comprising flavour components (4'); and, secondly, a leftover fraction (5') mainly comprising water and ethanol, that can either be discarded or optionally (not shown in the figures) fed to a distillation process to obtain a distilled alcohol fraction or as illutstrated in figure 2, be subjected to a freeze concentration process (C'), resulting in a aqueous leftover fraction (7'), that is discarded or that can be recirculated as water to the feed of the diafiltration step A).

The fraction (4') comprising concentrated flavour components can be entirely or partially mixed with the retentate (2) of the diafiltration step A) to obtain a beer concentrate (8') or can be used an ingredient for beer, as a component in beer reconstitution or as a flavour component to be added to a beer or cider. When used as a component in beer reconstitution starting from a beer concentrate, the beer concentrate can either be the beer concentrate obtained by the diafiltration or another beer concentrate.

In the method illustrated in figure 3, the second concentration step B" involves reverse osmosis with a membrane having a mesh size smaller than the membrane used in the diafiltration of step A) and results in separation of the permeate (3) from the previous diafiltration step (A) into two fractions: first, a fraction comprising flavour components (4'); and, secondly, a leftover fraction (5') mainly comprising water and ethanol, that can either be discarded or optionally (not shown in the figures) fed to a distillation process to obtain a distilled alcohol fraction or can be subjected to a freeze concentration process, resulting in a aqueous leftover fraction, that is discarded or that can be recirculated as water to the feed of the diafiltration step A).

The fraction (4") comprising alcohol and flavour components can be further concentrated by an adsorption process, wherein the flavour components are adsorbed on a column, whilst the ethanol and water in the fraction pass through the column and are collected as a fraction (7") that can be discarded or optionally (not shown in the figures) fed to a distillation process to obtain a distilled alcohol fraction. The flavour components adsorbed on the column can be eluted (depending on the components and column either with water or ethanol) to obtain a concentrated fraction (6") comprising volatile flavour components. Both fractions (4") or (6") comprising flavour components can be entirely or partially mixed with the retentate (2) of the diafiltration step A) to obtain a beer concentrate (8") or can be used an ingredient for beer, as a component in beer reconstitution or as a flavour component to be added to a beer or cider. When used as a component in beer reconstitution starting from a beer concentrate, the beer concentrate can either be the beer concentrate obtained by the diafiltration or another beer concentrate.

Alternatively or in combination with the above, the fraction (4") can be recirculated to the feed of the diafiltration step (A) such that the aroma's remain in the system.

In a further development of the embodiment shown in figure 3, a method is provided wherein the reverse osmosis is a high resolution reverse osmosis i.e. reverse osmosis conducted under operating pressure comprised within the range of 60-120 bar and at temperature of 0-12 °C.

## Claims

1. A method for preparing beer concentrate, comprising the steps of:
a) feeding a beer or cider (1) stream and a water (H₂O) stream to a first concentration step comprising diafiltration (A) over a nanofiltration or reverse osmosis membrane to obtain a low alcohol retentate (2) and a permeate (3) comprising alcohol and volatile flavour components, wherein the retentate (2) is **characterised by** the concentration of unfilterable compounds equal to or higher than 5% (w/w), preferably 10% (w/w), most preferably 15% (w/w), as calculated from density measurement corrected for the alcohol amount;
b) Subjecting the permeate comprising alcohol and volatile flavour components (3) to a next concentration step (B) comprising freeze concentration; reverse osmosis; or adsorption to obtain a fraction (4) comprising volatile flavour components (4) and a leftover fraction (5).

2. The method according to claim 1, the low alcohol retentate (2) having an alcohol concentration of X smaller than 1,2%ABV * 100/(100 - concentration factor), preferably smaller than 0,5% ABV * 100/(100 - concentration factor), most preferably smaller than 0,05% ABV * 100/(100 - concentration factor).

3. The method according to claim 1 or 2, subjecting the fraction (4) comprising volatile flavour components - obtained from the concentration step B) comprising reverse osmosis or freeze concentration - to an adsorption process C), adsorbing at least part of the volatile flavour components from the fraction (4) and subsequently eluting the adsorbed volatile flavour components in a volume of water or ethanol to obtain a concentrated fraction (6) of volatile flavour components.

4. The method according to any of the preceding claims, comprising recirculating the fraction comprising volatile flavour components obtained from step B) to the feed of the diafiltration step A).

5. The method according to any of the preceding claims, comprising subjecting the leftover fraction of an adsorption step B) or C) to a freeze concentration or distillation step D).

6. The method according to any of the preceding claims, comprising recirculating the leftover fraction obtained from a freeze concentration step B) or D) to the feed of the diafiltration step A).

7. The method according to any of the preceding claims, the water stream fed to the diafiltration step A) is deoxygenated and/or demineralized and/or deionized water.

8. The method according to any of the preceding claims, comprising adding at least part of the fraction comprising volatile flavour components obtained from process steps B) or C) to the low alcohol retentate.

9. Use of a fraction comprising volatile flavour components or of a concentrated fraction comprising volatile flavour components obtained by a method as identified in any of claims 1 to 8 as an ingredient for beer or cider, as a component in beer or cider reconstitution or as a flavour component to be added to a beer or cider.
